(19) Europäisches Patentamt

European Patent Office

Office européen des brevets

(11) **EP 0 783 788 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **95933317.0**

(22) Anmeldetag: **26.09.1995**

(51) Int Cl.⁶: **H02H 7/045**, H02H 3/28

(86) Internationale Anmeldenummer:
**PCT/DE95/01372**

(87) Internationale Veröffentlichungsnummer:
**WO 96/10857 (11.04.1996 Gazette 1996/16)**

(54) **STROMDIFFERENTIALSCHUTZANORDNUNG**

CURRENT DIFFERENTIAL PROTECTION ARRANGEMENT

DISPOSITIF DE PROTECTION CONTRE DES COURANTS DIFFERENTIELS

(84) Benannte Vertragsstaaten:
**CH FR GB LI SE**

(30) Priorität: **30.09.1994 DE 4436254**

(43) Veröffentlichungstag der Anmeldung:
**16.07.1997 Patentblatt 1997/29**

(73) Patentinhaber: **SIEMENS AKTIENGESELLSCHAFT**
**80333 München (DE)**

(72) Erfinder:
- **SCHIEL, Ludwig, Dr.**
  **D-10627 Berlin (DE)**
- **NOACK, Steffen**
  **D-13627 Berlin (DE)**
- **SCHUSTER, Norbert**
  **D-91301 Forchheim/Kersbach (DE)**

(56) Entgegenhaltungen:
**EP-A- 0 348 673**

**Beschreibung**

Die Erfindung bezieht sich auf eine Stromdifferentialschutzanordnung für eine elektrische Energieversorgungseinheit mit einer Meßwertvorverarbeitungseinrichtung, in der aus bei einem Fehlerfall an den Enden der Energieversorgungseinheit erfaßten Strömen fortlaufend jeweils Differenzstromwerte und diesen jeweils zugeordnete Stabilisierungsstromwerte gebildet werden, und mit einer Auswerteeinrichtung, in der anhand einer vorgegebenen Abhängigkeit des Differenzstromes vom Stabilisierungsstrom (Ansprechkennlinie) geprüft wird, ob die jeweils gebildeten Differenz- und Stabilisierungsstromwerte einen Punkt auf der einen Seite der Ansprechkennlinie (Sperren-Gebiet) oder einen Punkt auf der anderen Seite der Ansprechlinie (Auslösen-Gebiet) beschreiben, wobei die Auswerteeinrichtung hinsichtlich der Bildung des Sperren-Gebietes so ausgelegt ist, daß im Sperren-Gebiet zur Erzielung einer Zusatzstabilisierung ein Zusatzstabilisierungs-Bereich vorhanden ist, der durch einen unterhalb einer an einem vorbestimmten Stabilisierungsstromwert beginnenden und in vorgegebener Weise linear mit dem Stabilisierungsstrom ansteigenden Grenzkennlinie liegenden Abschnitt des Sperren-Gebietes definiert ist.

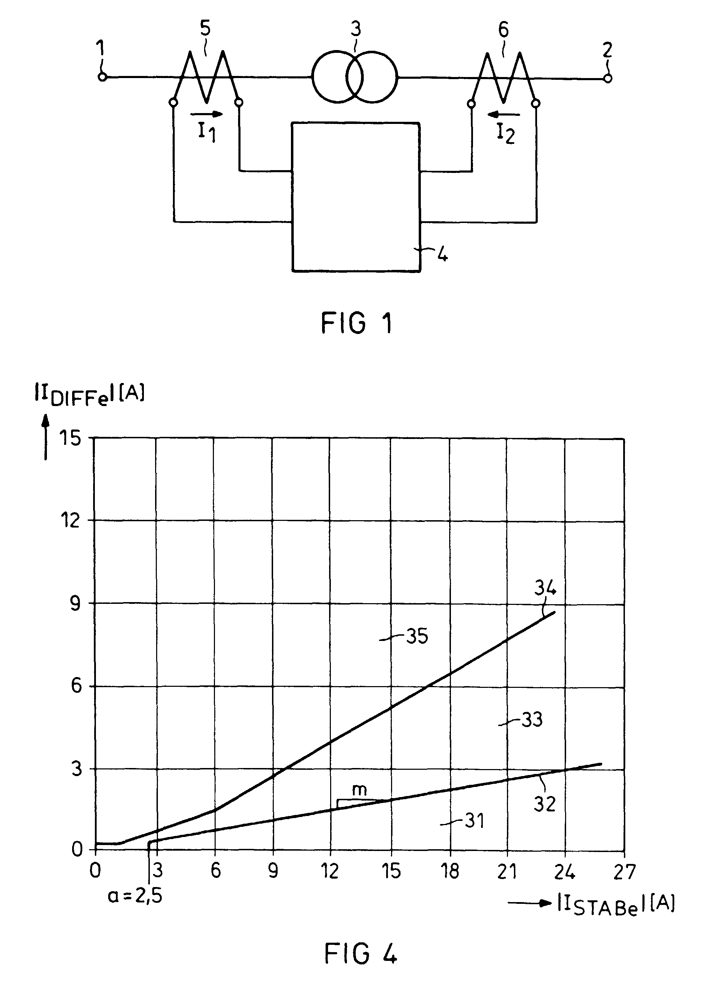

Eine Stromdifferentialschutzanordnung dieser Art ist in Form des Siemens-Digitalen Differentialschutzes 7UT51 V2.1 offenkundig vorbenutzt und in seinem wesentlichen Aufbau in dem zugehörigen Gerätehandbuch mit der Bestell- Nr. C 73000-G 1100-C77-7 beschrieben. Bei dieser bekannten Stromdifferentialschutzanordnung werden - wie bei Stromdifferentialschutzanordnungen allgemein üblich - die Ströme $I_1$ und $I_2$ (vergleiche auch Figur 1) an Enden 1 und 2 einer elektrischen Energieversorgungseinheit 3 erfaßt, bei der es sich beispielsweise um einen Motor, einen Transformator oder einen zu überwachenden Leitungsabschnitt eines elektrischen Energieversorgungsnetzes handeln kann. Wie Figur 1 ferner erkennen läßt, ist dabei die positive Stromrichtung der Ströme $I_1$ und $I_2$ so gewählt, daß jeweils in die zu überwachende elektrische Energieversorgungseinheit 3 hineinfließende Ströme positive Zahlrichtung aufweisen. Wie ferner allgemein üblich, werden auch bei der offenkundig vorbenutzten Stromdifferentialschutzanordnung 4 in einem Fehlerfalle in der elektrischen Energieversorgungseinheit 3 aus den erfaßten Strömen $I_1$ und $I_2$ Differenzstromwerte gebildet, die sich durch folgende Gleichung (1) beschreiben lassen:

$$I_{DIFF} = \left| I_1 + I_2 \right| \qquad (1)$$

Ferner werden jeweils den Differenzstromwerten zugeordnete Stabilsierungsstromwerte $I_{STAB}$ erzeugt gemäß folgender Beziehung (2):

$$I_{STAB} = \left| I_1 \right| + \left| I_2 \right| \qquad (2)$$

Die Bildung der Differenzstromwerte und der Stabilisierungsstromwerte erfolgt in einer Meßwertvorverarbeitungseinrichtung, die in der Figur 1 im einzelnen nicht dargestellt ist. In der Meßwertvorverarbeitungseinrichtung wird außerdem - wie dem oben erwähnten Handbuch auf Seite 27 zu entnehmen ist - im Falle eines Transformators als elektrischer Energieversorgungseinheit die jeweilige Schaltgruppe berücksichtigt, und es werden auch die Nullströme eliminiert.

In einer der Meßwertvorverarbeitungseinrichtung nachgeordneten Auswerteeinrichtung erfolgt bei der bekannten Stromdifferentialschutzanordnung eine Auswertung der jeweils gebildeten Differenz- und Stabilisierungsstromwerte dahingehend, daß anhand einer vorgegebenen Abhängigkeit des Differenzstromes vom Stabilisierungsstrom (Ansprech-Kennlinie) geprüft wird, ob die jeweils gebildeten Stromwerte einen Punkt auf der einen Seite der Ansprech-Kennlinie, also im Sperren-Gebiet, oder einen Punkt auf der anderen Seite der Ansprech-Kennlinie, also im Auslösen-Gebiet, beschreiben. Ergeben sich Stromwerte, die im Auslösen-Gebiet liegen, dann wird von der Stromdifferentialschutzanordnung ein Auslöse-Befehl gegeben; bei einem von dem Differenz- und dem zugeordneten Stabilisierungsstromwert beschriebenen Punkt im Sperren-Gebiet wird ein Auslösebefehl nicht gegeben, weil dies auf einen bezüglich der zu überwachenden elektrischen Energieversorgungseinrichtung außenliegenden Fehler hindeutet.

Wie dem genannten Geräte-Handbuch auf Seite 19 ferner zu entnehmen ist, wird bei dem offenkundig vorbenutzten Gerät eine Zusatzstabilisierung benutzt, mit der eine Stabilisierung bei Sättigung der zur Stromerfassung erforderlichen Wandler, z.B. der Wandler 5 und 6 gemäß Fig. 1, erreicht werden soll; durch Wandlersättigung kann nämlich ein innerer Fehler vorgetäuscht werden. Im Sperren-Gebiet ist deshalb von der Auswerteeinrichtung ein Zusatzstabilisierungs-Bereich definiert, der einen Abschnitt des Sperren-Gebietes darstellt. Dieser Abschnitt ist durch einen unterhalb einer an einem vorbestimmten Stabilisierungswert beginnenden und in vorgegebener Weise linear mit dem Stabilisierungsstrom ansteigenden Grenzlinie liegenden Abschnitt des Sperren-Gebietes definiert.

Durch den beschriebenen Aufbau der bekannten Stromdifferentialschutzanordnung ist sichergestellt, daß trotz der unvermeidbaren Wandlersättigung bei einem bezüglich der zu überwachenden elektrischen Energieversorgungseinheit außenliegenden Fehler ein Auslösebefehl nicht gegeben wird; dies ist dadurch ermöglicht, daß die Wandler für einige Millisekunden die Ströme noch richtig übertragen und erst danach unter Verfälschung der Stromwerte in Sättigung gehen. Wird also vor der Sättigung ein außenliegender Fehler erkannt, dann wird bei der bekannten Differentialschutzanordnung eine Blockierung vorgenommen, die bei einer einen inneren Fehler vortäuschenden Wandlersattigung einen Auslösebefehl verhindert.

Es ist ferner eine Stromdifferentialschutzanordnung für einen Transformator bekannt (Aufsatz von H.-J. Herrmann und U. Förster "Einsatz von Mikrorechnern für den digitalen Transformatordifferentialschutz" in der Zeitschrift "msr", 28 (1985) 4, Seiten 157 bis 160, insbesondere Seite 158), in der Differenzstromwerte und Stabilisierungsstromwerte gebildet werden. Die Bildung dieser Stromwerte erfolgt dabei unter Einsatz von $\Delta$-Strömen, die Differenzgrößen zwischen zwei phasengleichen Augenblickswerten der jeweils selben Größe zu unterschiedlichen Zeitpunkten darstellen. Werden mit derartigen $\Delta$-Strömen gebildete Differenz- und Stabilisierungsstromwerte zur Auswertung herangezogen, lassen sich aufgrund einer dadurch definierten Pufferzone schwachste innere Fehler von stärksten äußeren Fehlern unterscheiden.

Der Erfindung liegt die Aufgabe zugrunde, die eingangs beschriebene, bekannte Stromdifferentialschutzanordnung so weiter zu bilden, daß auch bei einem auf einen äußeren Fehler mit Wandlersattigung folgenden inneren Fehler dieser innere Fehler schnell und zuverlässig erfaßt und ein entsprechender Auslösebefehl gegeben werden kann.

Zur Lösung dieser Aufgabe enthält bei einer Stromdifferentialschutzanordnung der eingangs angegebenen Art erfindungsgemäß die Auswerteeinrichtung in einer Stabilisierungsschaltung eine Prüfanordnung, die die jeweils gebildeten Differenz- und Stabilisierungsstromwerte dahingehend untersucht, ob sie einen Punkt im Zusatzstabilisierungs-Bereich beschreiben, und die bei einem ersten festgestellten Punkt im Zusatzstabilisierungs-Bereich nach Eintritt des Fehlerfalles ein Sperrsignal abgibt; der Prüfanordnung ist eine Blockiereinrichtung mit zugeordneter Rückstelleinrichtung derart nachgeordnet, daß durch das Sperrsignal einerseits die Blockiereinrichtung aktiviert wird und andererseits bei einem ersten festgestellten Punkt außerhalb des Zusatzstabilisierungs-Bereichs im Verlaufe desselben Fehlerfalles ein in der Rückstelleinrichtung vorhandenes Zeitglied mit vorgegebener Zeitverzögerung gestartet wird, das ausgangsseitig mit einem Rücksetzeingang der Blockiereinrichtung in Verbindung steht und nach der vorgegebenen Zeitverzögerung die Blockiereinrichtung zurücksetzt.

Der wesentliche Vorteil der erfindungsgemäßen Stromdifferentialschutzanordnung besteht darin, daß auch bei einem auf einen äußeren Fehler unmittelbar folgenden inneren Fehler der zu überwachenden elektrischen Energieversorgungseinheit ein Auslösebefehl korrekt erzeugt wird, indem die Differenz- und Stabilisierungsstromwerte hinsichtlich der von ihnen beschriebenen Punkte darauf überprüft werden, ob sie im Zusatzstabilisierungs-Bereich liegen. Wenn nach Auftreten eines Fehlers erstmals mit den Differenz- und Stabilisierungsstromwerten ein Punkt im Zusatzstabilisierungs-Bereich festgestellt wird, wird ein Sperrsignal zur Aktivierung der Blockiereinrichtung erzeugt. Da nur bei einem äußeren Fehler die Stabilisierungs- und Differenzstromwerte einen Punkt im Zusatzstabilsierungs-Bereich beschreiben, ist damit bereits festgestellt, daß ein äußerer Fehler vorliegt und insofern eine Blockierung der Blockiereinrichtung erfolgen kann, um die nachfolgend zu erwartende Sättigung der Stromwandler ohne Einfluß auf das Auslöseverhalten der erfindungsgemäßen Stromdifferentialschutzanordnung zu halten. Verläßt die Kurve der Stabilisierungs- und Differenzstromwerte nach einigen Millisekunden den Zusatzstabilisierungs-Bereich, dann wird durch das Zeitglied mit vorgegebener Zeitverzögerung dafür gesorgt, daß während der Wandlersattigung die Blockiereinrichtung blockiert ist und daher kein Auslösesignal abgeben kann. Es wird also bei der erfindungsgemäßen Stromdifferentialschutzanordnung bei einem auf einen äußeren Fehler unmittelbar folgenden inneren Fehler eine Blockierung nicht vom Zeitpunkt der Erfassung eines äußeren Fehlers an für eine fest vorgegebene Zeit vorgenommen, sondern nur von einem von den jeweiligen Verhältnissen abhängigen Zeitpunkt an für eine vorgegebene Zeitdauer.

Um einen auf einen äußeren Fehler folgenden inneren Fehler besonders schnell und sicher erfassen zu können, ist bei einer weiteren Ausführungsform der erfindungsgemäßen Stromdifferentialschutzanordnung in der Rückstelleinrichtung eine Überwachungseinrichtung vorhanden, die eingangsseitig mit den Differenz- und Stabilisierungsstromwerten beaufschlagt ist und ausgangsseitig mit einer Zeitstufe mit vorbestimmter Zeitverzögerung verbunden ist; die Überwachungseinrichtung weist eingangsseitig einen Quotientenbildner auf, der den Quotienten aus den jeweiligen Differenz- und Stabilisierungsstromwerten bildet; in der Überwachungseinrichtung ist dem Quotientenbildner eine Schwellenwerterfassungseinrichtung nachgeordnet, die bei einem oberhalb eines Schwellenwertes liegenden Quotienten die Zeitstufe startet, und die Zeitstufe ist ausgangsseitig mit dem Rücksetzeingang der Blokkiereinrichtung verbunden.

Diese Ausführungsform der erfindungsgemäßen Stromdifferentialschutzanordnung hat den Vorteil, daß die Blockiereinrichtung bereits dann wieder entriegelt wird, wenn der Quotient aus dem jeweiligen Differenzstromwert und dem jeweiligen zugeordneten Stabilisierungsstromwert einen bestimmten Grenzwert überschritten und die durch die Zeitstufe vorgegebene Zeitdauer abgelaufen ist, so daß auch hier sichergestellt ist, daß nach einem äußeren Fehler zunächst auftretende Sättigungserscheinungen der Stromwandler das Verhalten der erfindungsgemäßen Stromdifferentialschutzanordnung nicht beeinflussen können, indem diese erst nach Ablauf der vorbestimmten Zeitverzögerung ein Auslösesignal infolge entriegelter Blockiereinrichtung abgeben kann.

Um möglichst schnell bei einem auf einen äußeren Fehler folgenden inneren Fehler einen Auslösebefehl zu gewinnen, wird es bei der erfindungsgemäßen Stromdifferentialschutzanordnung ferner als vorteilhaft angesehen, wenn gemäß einer weiteren erfindungsgemäßen Ausgestaltung die Rückstelleinrichtung eine mit den Differenz- und Stabilisierungsstromwerten beaufschlagte Überwachungsanordnung enthält, die eingangsseitig eine Anordnung zur Quotientenbildung aus den Differenz- und Stabilisierungsstromwerten enthält; der Anordnung zur Quotientenbildung ist ein Differenzbildner nachgeschaltet, der die Differenz der jeweils nacheinander gebildeten Quotienten aus den Differenz- und Stabilisierungsstromwerten bildet, und dem Differenzbildner ist eine Schwellwerterfassungsanordnung nachgeordnet, in der die jeweils gebildete Differenz einerseits auf das Überschreiten eines oberen Schwellenwertes mit Erzeugen eines ersten Steuersignals und andererseits auf das Unterschreiten eines unteren Schwellenwertes mit Erzeugen eines zweiten Steuersignals untersucht wird; die Überwachungsanordnung ist mit der Blockiereinrichtung über eine Zähleinrichtung für das erste Steuersignal verbunden, die bei einem vorgegebenen Zählerstand ein Rücksetzsignal für die Blockiereinrichtung abgibt.

Diese Ausführungsform hat den wesentlichen Vorteil, daß bei auf einen äußeren Fehler mit Wandlersättigung folgenden inneren Fehlern mit relativ niedrigen Strömen ebenfalls eine schnelle und zuverlässige Erfassung des inneren Fehlers möglich ist, weil die Blockiereinrichtung bereits dann - vor Ablauf des der Prüfanordnung nachgeordneten Zeitgliedes - aktiviert werden kann, wenn die Zähleinrichtung ein Rücksetzsignal für die Blockiereinrichtung abgegeben hat. Da die Zähleinrichtung mit dem ersten Steuersignal beaufschlagt ist, kann sie frühestens ein Rücksetzsignal nach Abklingen der Wandlersättigung abgeben.

Bei der erfindungsgemäßen Stromdifferentialschutzanordnung sind das Zeitglied, die Zeitstufe und die Zähleinrichtung vorteilhafterweise über ein Logik-Glied mit dem Rücksetzeingang der Blockiereinrichtung verbunden.

Um bei der erfindungsgemäßen Stromdifferentialschutzanordnung Einflüsse der Phasenlage der erfaßten Ströme auf die Erzeugung eines Auslösebefehls auszuschließen, enthält bei einer bevorzugten Ausgestaltung der erfindungsgemäßen Stromdifferentialschutzanordnung die Meßwertvorverarbeitungseinrichtung eine Berechnungseinheit, in der aus den erfaßten Strömen effektivwertproportionale Meßgrößen gebildet werden, mit denen die Differenz- und Stabilisierungsstromwerte gewonnen werden. Die Bildung effektivwertproportionaler Größen kann dabei beispielsweise durch Filterung oder Gleichrichtung erfolgen.

Zur weiteren Erläuterung der Erfindung sind in

Figur 2 ein Blockschaltbild eines Ausführungsbeispiels der erfindungsgemäßen Stromdifferentialschutzanordnung, in

Figur 3 ein Teil einer Auswerteeinrichtung gemäß Figur 2 mit Prüfanordnung und Rückstelleinrichtung, in

Figur 4 ein Diagramm mit Ansprech-Kennlinie und Grenzlinie des Zusatzstabilisierungs-Bereiches, in

Figur 5 mehrere Diagramme zur Erläuterung des Verhaltens der erfindungsgemäßen Stromdifferentialschutzanordnung bei einem äußeren Fehler, in

Figur 6 mehrere Diagramme zur Erläuterung der Wirkungsweise der erfindungsgemäßen Stromdifferentialschutzanordnung bei einem inneren Fehler und in

Figur 7 mehrere Diagramme zur Darstellung des Verhaltens der erfindungsgemäßen Stromdifferentialschutzanordnung bei einem auf einen äußeren Fehler folgenden inneren Fehler dargestellt.

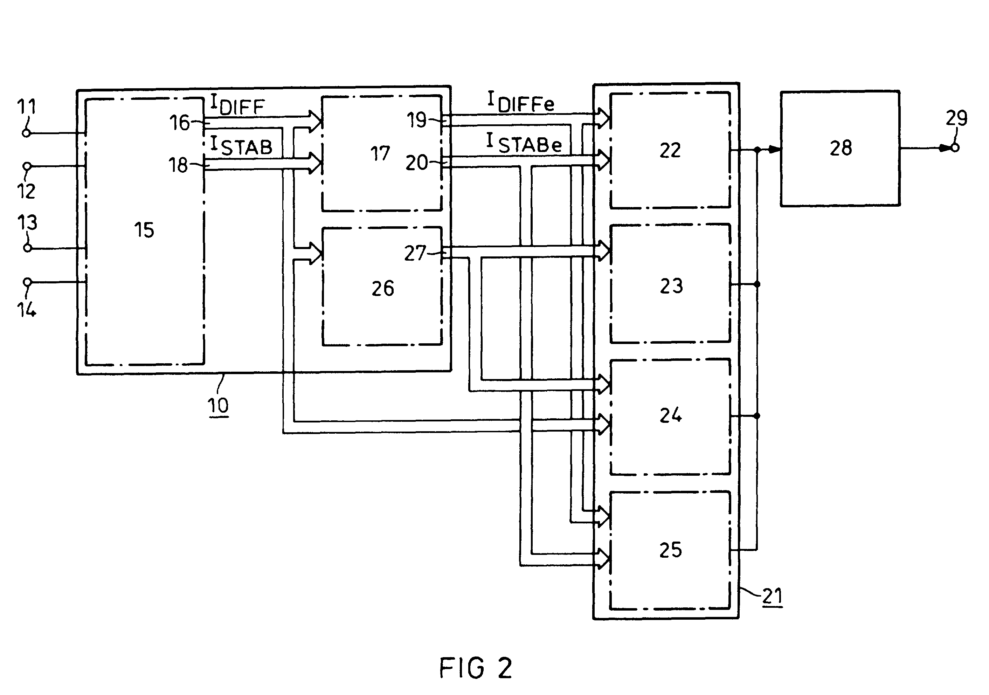

Das in Figur 2 dargestellte Blockschaltbild der erfindungsgemäßen Stromdifferentialschutzanordnung enthält eine Meßwertvorverarbeitungseinrichtung 10, die an ihren Eingängen 11 und 12 mit dem erfaßten Strom $I_1$ (vergleiche auch Figur 1) und an ihren Eingängen 13 und 14 mit dem Strom $I_2$ beaufschlagt ist. Die Meßwertvorverarbeitungseinrichtung 10 ist eingangsseitig mit einem Meßwerterfassungsblock 15 versehen, in dem in bekannter Weise Differenzströme und Stabilisierungsströme gebildet werden. Dabei wird im Falle eines Transformators als zu überwachender elektrischer Energieversorgungseinheit in dem Meßwerterfassungsblock 15 auch eine Schaltgruppenanpassung vorgenommen; außerdem erfolgt hier zusätzlich eine Betragsanpassung. Die Meßwertvorverarbeitung erfolgt in dem Meßwertverarbeitungsblock 15 nach Analog-Digital-Umsetzung auf digitale Weise, so daß dem jeweiligen Differenzstrom entsprechende Differenzstromwerte $I_{DIFF}$ über einen Datenbus 16 einer Berechnungseinheit 17 zugeführt werden. Diese Berechnungseinheit 17 erhält über einen weiteren Datenbus 18 von dem Meßwertverarbeitungsblock 15 dem Stabilsierungsstrom proportionale Stabilisörungsstromwerte $I_{STAB}$ in digitaler Form.

In der Berechnungseinheit 17 werden durch Filterung oder Gleichrichtung aus den Differenz- und Stabilisierungsstromwerten $I_{DIFF}$ und $I_{STAB}$ effektivwertproportionale Größen $I_{DIFFe}$ und $I_{STABe}$ gebildet, die über jeweils einen weiteren Datenbus 19 und 20 einer Auswerteeinrichtung 21 zugeführt werden. Die Auswerteeinrichtung 21 enthält eine Auslöseeinrichtung 22, eine Stabilisierungsschaltung 23 für harmonische Oberschwingungen, eine Schnellauslöseeinrichtung 24 und eine weitere Stabilisierungsschaltung 25.

Ergänzend ist in diesem Zusammenhang darauf hinzuweisen, daß die Meßwertvorverarbeitungseinrichtung 10 auch eine Filtereinheit 26 enthält, die eingangsseitig ebenfalls an dem Datenbus 16 liegt und die Grundschwingung sowie die zweite und fünfte Harmonische ausfiltert. Ausgangsseitig ist die Filtereinheit 26 über einen zusätzlichen Datenbus 27 mit der Stabilisierungsschaltung 23 und der Schnellauslöseeinrichtung 24 verbunden. Die Schnellauslöseeinrichtung 24 liegt eingangsseitig übrigens auch an dem Datenbus 16.

Die Ausgangssignale der einzelnen Einheiten 22 bis 25 der Auswerteeinrichtung 21 sind mit einer Logikschaltung 28 verbunden, die bei entsprechender Beaufschlagung einen Auslösebefehl 29 an nicht dargestellte, der zu überwachenden elektrischen Energieversorgungseinheit zugeordnete Leistungsschalter abgibt.

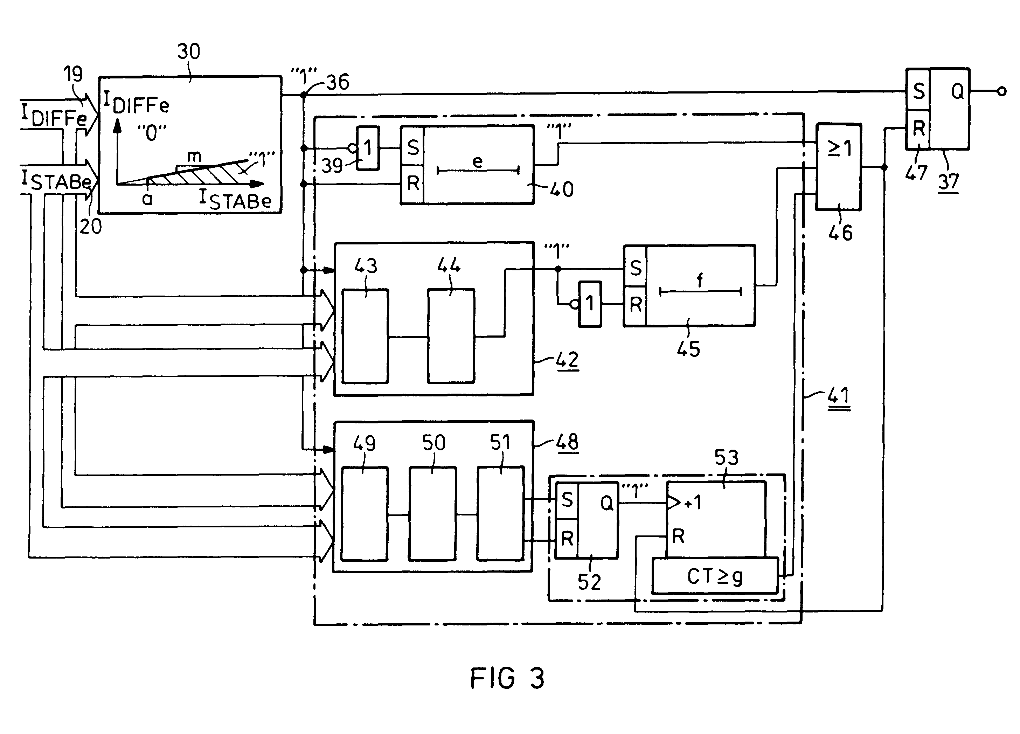

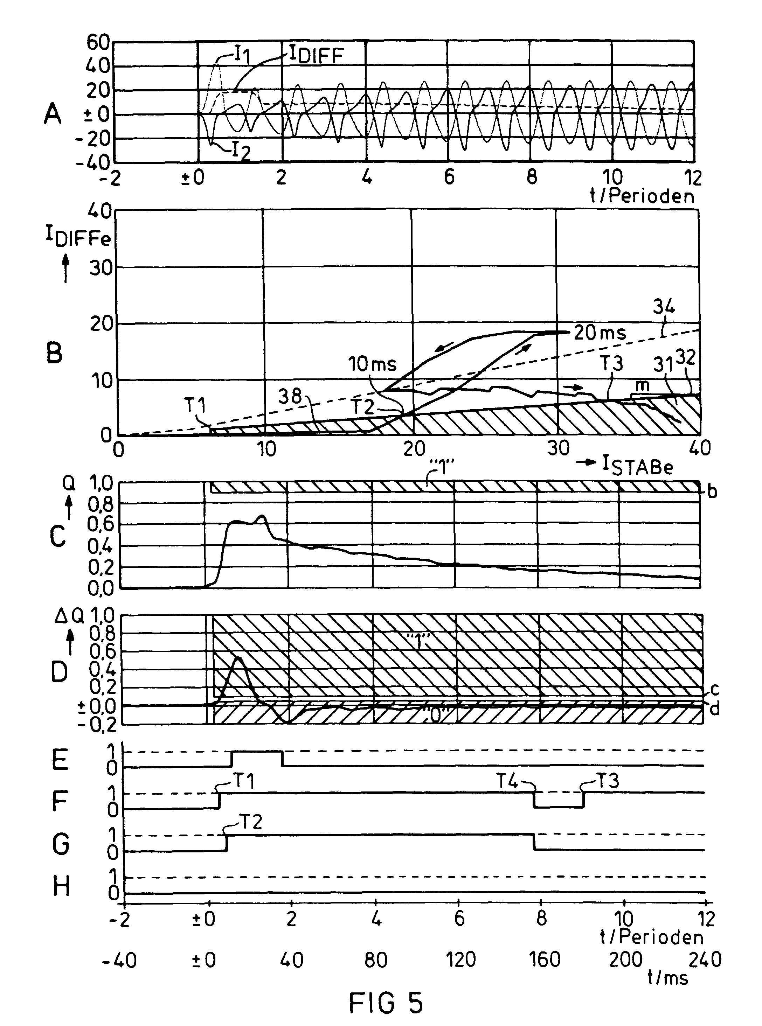

In der Figur 3 ist die weitere Stabilisierungsschaltung 25 der Auswerteeinrichtung 21 gemäß Figur 2 im einzelnen dargestellt. Wie die Figur 3 im einzelnen erkennen läßt, weist die weitere Stabilisierungsschaltung 25 eine Prüfanordnung 30 auf, die eingangsseitig an die Datenbusse 19 und 20 (vergleiche auch Figur 2) angeschlossen ist und demzufolge über diese Datenbusse mit Differenzstromwerten $I_{DIFFe}$ und Stabilisierungsstromwerten $I_{STABe}$ beaufschlagt ist. In der Prüfanordnung 30 werden jeweils einander zugeordnete Differenzstromwerte und Stabilisierungsstromwerte daraufhin überprüft, ob sie jeweils Punkte definieren, die in einem Zusatzstabilisierungs-Bereich 31 (vergleiche Figur 4) liegen.

In dieser Figur 4 ist über dem Betrag des Stabilisierungsstromes $I_{STABe}$ der Betrag des Differenzstromes $I_{DIFFe}$ aufgetragen. Der Figur 4 läßt sich ferner entnehmen, daß der Zusatzstabilisierungs-Bereich 31 durch eine Grenzlinie 32 definiert ist, die bei einem Wert des Stabilisierungsstromes $I_{STABe}$ von a=2,5 zunächst senkrecht nach oben verläuft und dann mit einer vorgegebenen Steigung m linear mit dem Stabilisierungsstrom $I_{STABe}$ ansteigt. Der Zusatzstabilisierungs-Bereich 31 gemäß Figur 4 bildet einen Teil eines Sperren-Gebietes 33, das durch eine Ansprech-Kennlinie 34 gegenüber einem Auslösen-Gebiet 35 abgegrenzt ist. Die Figur 4 zeigt also, daß bei jeweils einander zugeordneten Stromdifferenz- und Stabilisierungsstromwerten mit Punkten im Sperren-Gebiet 33, ein Auslösebefehl nicht gegeben wird, dagegen die Ausgabe eines Auslösebefehls dann erfolgt, wenn einander zugeordnete Differenz- und Stabilisierungsstromwerte einen Punkt im Auslösegebiet 35 beschreiben.

Zurückgehend zur Figur 3 ergibt sich unter Berücksichtigung der Ausführungen zu Figur 4, daß die Prüfanordnung 30 überprüft, ob nach Eintritt eines Fehlerfalles sich einander zugeordnete Differenz- und Stabilisierungsstromwerte $I_{DIFFe}$ und $I_{STABe}$ ergeben, die in den Zusatzstabilisierungs-Bereich 31 fallen; im besonderen wird überprüft, wann ein erster von den Stromwerten gebildeter Punkt in den Zusatzstabilisierungs-Bereich 31 fällt. Liegt beispielsweise ein äußerer Fehler vor, auf den Figur 5 Bezug nimmt, dann wird - wie das Diagramm B der Figur 5 zeigt, in dem der Differenzstrom $I_{DIFF}$ in Abhängigkeit vom Stabilisierungsstrom $I_{STABe}$

dargestellt ist - nach wenigen Millisekunden zum Zeitpunkt T1 ein derartiger Punkt festgestellt. Von der Prüfanordnung 30 wird daraufhin ein Sperrsignal in Form eines "1"-Signales an ihrem Ausgang 36 erzeugt, durch das eine nachgeordnete Blockiereinrichtung 37 aktiviert wird; die Ausgabe eines Auslösebefehls wird also blockiert. Das Diagramm F der Figur 5 zeigt, daß die Blockiereinrichtung 37 vom Zeitpunkt T1 an blockiert ist. Wird nachfolgend von der Prüfanordnung 30 festgestellt, daß sich die durch jeweils aufeinanderfolgende Punkte der Stromwerte ergebende Kurve 38 im Diagramm B der Figur 5 aus dem Zusatzstabilisierungs-Bereich 31 hinaus bewegt, dann wird zu diesem Zeitpunkt T2 ein "0"-Signal erzeugt, das über einen Invertierer 39 (vergleiche Figur 3) eine nachgeordnete Zeitstufe 40 in einer Rückstelleinrichtung 41 für eine vorbestimmte Zeitdauer e startet.

Wie das Diagramm B der Figur 5 ferner zeigt, durchschneidet die Kurve 38 nach etwa 10 ms die Ansprechkennlinie 34, woraufhin die Auslöseeinrichtung 22 der Auswerteeinrichtung 21 (vergleiche Figur 2) ausgangsseitig ein Signal abgibt. Dieses Signal darf aber nicht zu einem Auslösebefehl führen, weil im vorliegenden Falle ein äußerer Fehler bezüglich der zu überwachenden elektrischen Energieversorgungseinheit angenommen worden ist, das Überschreiten der Ansprechkennlinie 34 also nur auf Sättigungserscheinungen der beteiligten Stromwandler zurückzuführen ist. Das Ausgangssignal der Auslöseeinrichtung 22 ist im Diagramm E der Figur 5 dargestellt.

Mit abklingender Sättigung der beteiligten Stromwandler nimmt die Kurve 38 nachfolgend auch wieder niedrigere Werte an, um schließlich zum Zeitpunkt T3 die Grenzlinie 32 des Zusatzstabilisierungs-Bereichs 31 zu kreuzen. Zum Zeitpunkt T3 wird damit - vergleiche Diagramm F der Figur 5 - die Blockiereinrichtung 37 wiederum blockiert; die Blockiereinrichtung 37 war nämlich zum Zeitpunkt T4 wieder deaktiviert worden, nachdem die Zeitstufe 40 abgelaufen war.

Ergänzend zu der schon bisher im Zusammenhang mit der Beschreibung der Figur 3 erfolgten Erläuterung der Figur 5 ist zu dieser Figur 5 noch darauf hinzuweisen, daß in ihrem Diagramm A der Verlauf der an den Enden der zu überwachenden elektrischen Energieversorgungseinheit erfaßten Ströme $I_1$ und $I_2$ in Abhängigkeit von der Zeit in Perioden des Netzes wiedergegeben ist, wobei die in diesem Diagramm strichliert eingezeichnete Kurve den Differenzstrom $I_{DIFF}$ wiedergibt. Es ist deutlich zu erkennen, daß innerhalb der ersten beiden Perioden der Differenzstrom relativ große Werte annimmt, was bei dem angenommenen äußeren Fehlerfall vor allem auf Wandlersattigung zurückzuführen ist.

Das Diagramm H der Figur 5 zeigt in Abhängigkeit von der Zeit in Perioden den zeitlichen Verlauf des Auslösebefehls und läßt erkennen, daß bei dem angenommenen äußeren Fehler trotz Wandlersattigung ein Auslösebefehl nicht erzeugt worden ist.

Die Rückstelleinrichtung 41 gemäß Figur 3 ist nicht nur hinsichtlich des Zeitgliedes 40 mit der Prüfanordnung 30 verbunden, sondern ist an die Busse 19 und 20 auch mit einer Überwachungseinrichtung 42 angeschlossen, die somit auch mit den Differenzstromwerten $I_{DIFFe}$ und Stabilisierungsstromwerten $I_{STABe}$ beaufschlagt ist. Die Überwachungseinrichtung 42 ist eingangsseitig mit einem Quotientenbildner 43 versehen, in dem der Quotient Q aus dem jeweiligen Differenzstromwert $I_{DIFFe}$ und dem jeweiligen zugeordneten Stabilisierungsstromwert $I_{STABe}$ gebildet wird. Dem Quotientenbildner 43 ist eine Schwellenwerterfassungseinrichtung 44 nachgeordnet, die bei einem einen Schwellenwert b überschreitenden Wert des Quotienten Q ein "1"-Signal abgibt, von dem eine nachgeordnete Zeitstufe 45 gesetzt wird. Ausgangsseitig ist die Zeitstufe 45 über ein ODER-Glied 46 an einen Rücksetzeingang 47 der Blockiereinrichtung 37 angeschlossen; über das ODER-Glied 46 ist übrigens auch der Ausgang des Zeitgliedes 40 mit dem Rücksetzeingang 47 der Blockiereinrichtung 37 verbunden. Wird von der Schwellenwerterfassungseinrichtung 44 ein Quotient Q erfaßt, der kleiner als der Schwellwert b ist, dann wird ein "0"-Signal erzeugt, das die Zeitstufe 45 über einen vorgeordneten Invertierer zurücksetzt.

Zur näheren Erläuterung der Funktion der Überwachungseinrichtung 42 nach Figur 3 wird nochmals auf die Fig. 5 zurückgeblendet, und zwar auf das Diagramm C. Dort ist in dem angenommenen Fall eines äußeren Fehlers über der Zeit in Perioden der Quotient Q aus dem jeweiligen Differenzstrom $I_{DIFFe}$ und dem zugeordneten Stabilisierungsstrom $I_{STABe}$ aufgetragen und der Schwellenwert b eingezeichnet. Dem Diagramm C läßt sich entnehmen, daß in dem dargestellten Fall der Quotient Q den Schwellenwert b nicht überschreitet, so daß von der Überwachungseinrichtung 42 ein "0"-Signal abgegeben wird; die Zeitstufe 45 wird demzufolge nicht gesetzt. Die Blockiereinrichtung 37 ist also durch die Überwachungseinrichtung 42 in diesem Falle nicht beeinflußt.

Der Figur 3 läßt sich schließlich noch entnehmen, daß die Rückstelleinrichtung 41 mit einer Überwachungsanordnung 48 versehen ist, die eingangsseitig ebenfalls über die Datenbusse 19 und 20 mit Differenzstromwerten $I_{DIFFe}$ und Stabilisierungsstromwerten $I_{STABe}$ beaufschlagt ist. Die Überwachungsanordnung 48 ist eingangsseitig wiederum mit einer Anordnung zur Quotientenbildung 49 versehen, der ein Differenzbildner 50 nachgeordnet ist. In diesem Differenzbildner 50 wird jeweils die Differenz jeweils aufeinanderfolgend erzeugter Quotienten Q gebildet, und es wird in einer nachgeschalteten Schwellenwerterfassungsanordnung 51 überprüft, ob die Differenz der Quotienten größer als ein Schwellenwert c oder kleiner als ein weiterer Schwellenwert d ist. Ergibt sich eine Differenz der Quotienten Q mit einem Schwellenwert größer als c, dann wird über eine Kippstufe 52 eine Zähleinrichtung 53 inkrementiert; wird eine Differenz der Quotienten Q kleiner als der Schwellenwert d ermittelt, dann wird die Kippstufe 52 wieder zurückgesetzt, die Zähleinrichtung 53 also nicht weiter hochgezählt. Die Zähleinrichtung kann bezüglich eines Zählergrenzstandes g unterschiedlich eingestellt sein; bei einem Grenzstand g wird von der Zähleinrichtung an das ODER-Glied 46 ein Signal abgegeben, woraufhin die Blockiereinrichtung 37 zurückgesetzt wird. Die Zähleinrichtung 53 wird von dem ODER-GLIED 46 zurückgesetzt.

Zur näheren Erläuterung der Wirkungsweise der Überwachungsanordnung 48 nach der Figur 3 wird auf das Diagramm D der Figur 5 Bezug genommen, indem über der Zeit in Perioden die Differenz $\Delta Q$ aufeinanderfolgender Quotienten Q dargestellt ist. Bei dem angenommenen äußeren Fehlerfall überschreitet die Kurve zunächst einmal den Grenzwert c, woraufhin die Kippstufe 52 gesetzt wird und die Zählereinrichtung 53 um 1 hochgezählt wird. Später unterschreitet die Kurve $\Delta Q$ im Diagramm D den unteren Schwellenwert d, woraufhin die Kippstufe 52 rückgesetzt wird; in der Zähleinrichtung 53 wird also nicht weitergezählt. Ist die Zähleinrichtung auf einen Zählergrenzstand von "2" eingestellt, ergibt sich also an ihrem Ausgang kein Signal an das ODER-Glied 46, und die Blockiereinrichtung 37 wird nicht zurückgesetzt; sie bleibt also aktiviert.

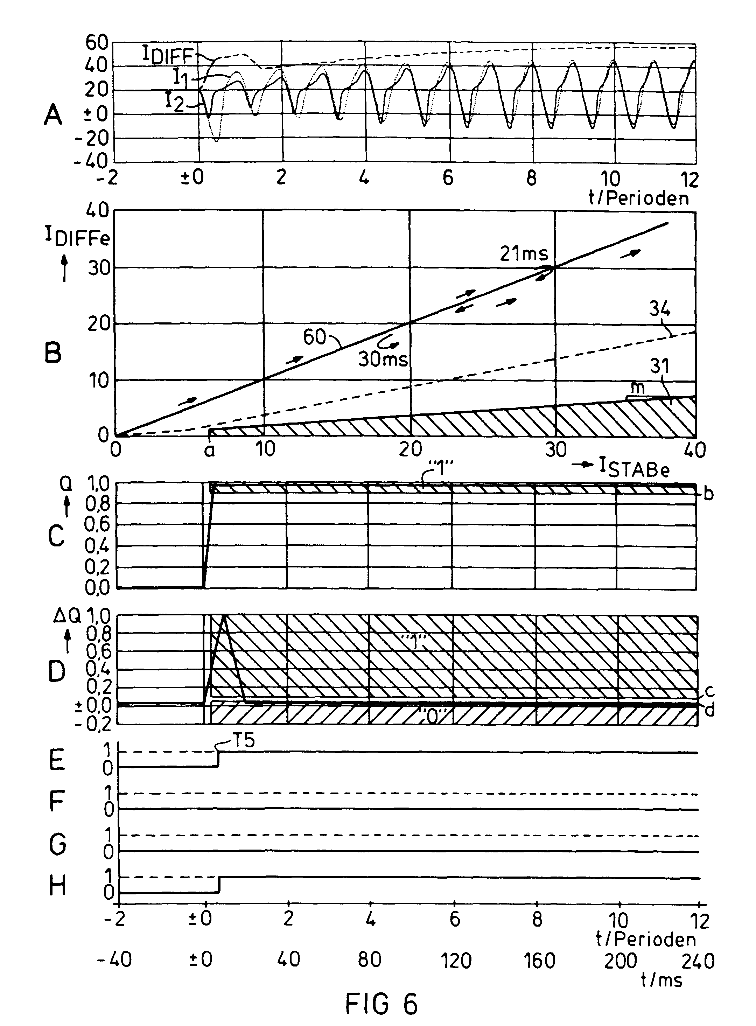

Die Figur 6 zeigt Diagramme A bis H ähnlich wie die Figur 5, jedoch den Verlauf der oben im einzelnen beschriebenen Größen für den Fall eines inneren Fehlers mit Sättigung. Der Verlauf der Ströme $I_1$ und $I_2$ ist im Diagramm A wiederum über der Zeit in Perioden wiedergegeben, wobei die strichlierte Kurve wiederum den Differenzstrom $I_{DIFF}$ wiedergibt.

Das Diagramm B der Figur 6 läßt erkennen, daß bei dem angenommenen inneren Fehler die durch die einzelnen aufeinanderfolgenden Punkte aus Differenz- und Stabilisierungsstromwerten $I_{DIFFe}$ und $I_{STABe}$ gebildete Kurve 60 anders als die Kurve 38 nach dem Diagramm B der Figur 5 den Zusatzstabilisierungs-Bereich 31 nicht schneidet, sondern weit oberhalb der Ansprech-Kennlinie 34 verläuft. In diesem Falle spricht die Auslöseschaltung 22 (vergleiche Figur 2) zu einem Zeitpunkt T5 nach dem Auftreten des Fehlers an, der durch die Reaktionszeit bedingt ist. Eine Blockierung der Blockiereinrichtung 37 (vergleiche Figur 3) findet nicht statt, wie das Diagramm F der Figur 6 deutlich erkennen läßt. Damit wird über die Logikschaltung 28 gemäß Figur 2 zum Zeitpunkt T5 ein Auslösebefehl ohne weitere Verzögerung gegeben. Die Rückstelleinrichtung 41 hat keinerlei Einfluß auf das Auslöseverhalten der Differentialschutzanordnung, weil die Prüfanordnung 30 ihren Ausgang 36 zu keinem Zeitpunkt aktiviert.

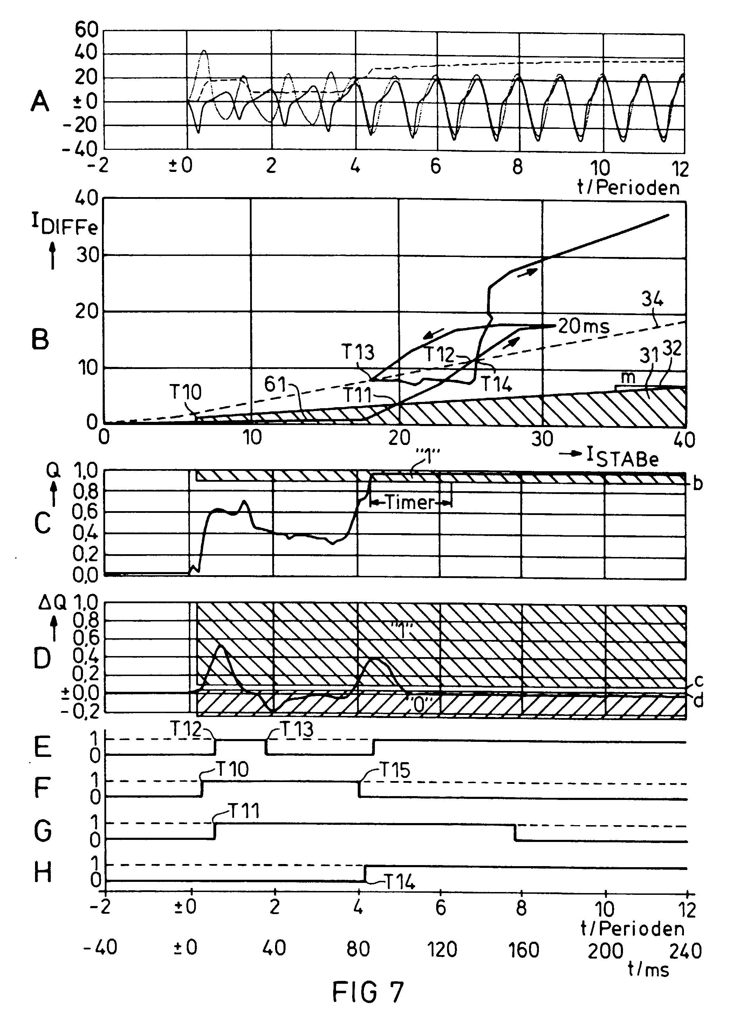

In Figur 7 sind die Verhältnisse dargestellt, wie sie sich bei einem auf einen äußeren Fehler folgenden inneren Fehler ergeben. Das Diagramm A der Figur 7 zeigt wiederum den Verlauf der Ströme $I_1$ und $I_2$ in Abhängigkeit von der Zeit in Perioden sowie den sich jeweils ergebenden Differenzstrom $I_{DIFF}$. Das Diagramm B zeigt, daß zum Zeitpunkt T10 die von den einzelnen Punkten der nacheinander erfaßten Differenz- und Stabilisierungsstromwerte gebildete Kurve 61 in den Zusatzstabilisierungsstrom-Bereich 31 eintritt, woraufhin von der Prüfanordnung 30 (siehe Fig. 3) über ihren Ausgang 36 die Blockiereinrichtung 37 sofort aktiviert wird. Zum Zeitpunkt T11 schneidet die Kurve 61 die Grenzlinie 32 des Zusatzstabilisierungs-Bereichs 31, woraufhin die Prüfanordnung 30 an ihrem Ausgang 36 ein "0"-Signal erzeugt, das nach Invertierung das Zeitglied 40 für die vorbestimmte Zeitverzögerung e anlaufen läßt. Die Kurve 61 schneidet anschließend wegen auftretender Wandlersattigung zum Zeitpunkt T12 die Ansprech-Kennlinie 34, woraufhin von der Auslöseschaltung 22 (vgl. Fig. 2) der Auswerteeinrichtung 21 ein "1"-Signal erzeugt wird, wie das Diagramm E der Figur 7 erkennen läßt. Zum Zeitpunkt T13 schneidet die Kurve 61 erneut die Ansprech-Kennlinie 34 (Wandlersattigung ist abgeklungen), woraufhin die Auslöseschaltung 22 wieder in den "0"-Zustand zurückfällt. Die zwischen den Zeitpunkten T12 und T13 aufgetretene Wandlersattigung hat keinen Einfluß auf das Auslöseverhalten der Differentialschutzanordnung, weil im Zeitintervall zwischen T12 und T13 die Blockiereinrichtung 37 aktiviert war.

Wie das Diagramm B der Figur 7 ferner erkennen läßt, tritt etwa zum Zeitpunkt T14 ein innerer Fehler auf, woraufhin die Kurve 61 ein drittes Mal die Ansprech-Kennlinie 34 schneidet. Gemäß dem Diagramm H der Figur 7 wird daraufhin am Ausgang 29 der Stromdifferentialschutzeinrichtung ein Auslösesignal abgegeben, weil vorher die Aktivierung der Blockiereinrichtung 37 zum Zeitpunkt T15 dadurch rückgängig gemacht worden war, daß bei den dargestellten Verhältnissen gemäß den Diagrammen C und D die Kurve nach dem Diagramm D zum Zeitpunkt T15 ein zweites Mal den oberen Schwellenwert c überschritten hatte. Dies führte über die Zähleinrichtung 53 und das ODER-Glied 46 zu einer Deaktivierung der Blockiereinrichtung 37.

Steigt bei einem auf einen äußeren Fehler unmittelbar folgenden inneren Fehler der Quotient Q - anders als in dem Diagramm C der Fig. 7 dargestellt - steiler an und erreicht er vergleichsweise schnell den Schwellenwert b, dann wird die Auslösung dadurch bewirkt, daß nach Ablauf der Zeitverzögerung f die Blockiereinrichtung 37 deaktiviert wird.

**Patentansprüche**

1. Stromdifferentialschutzanordnung für eine elektrische Energieversorgungseinheit mit

    - einer Meßwertvorverarbeitungseinrichtung (10), in der aus bei einem Fehlerfall an den Enden (1, 2) der Energieversorgungseinheit (3) erfaßten Strömen ($I_1$, $I_2$) fortlaufend jeweils Differenzstromwerte ($I_{DIFF}$, $I_{DIFFe}$) und diesen jeweils zugeordnete Stabilisierungsstromwerte ($I_{STAB}$, $I_{STABe}$) gebildet werden, und mit
    - einer Auswerteeinrichtung (21), in der anhand einer vorgegebenen Abhängigkeit des Differenzstromes ($I_{DIFFe}$) vom Stabilisierungsstrom ($I_{STABe}$) gemäß einer Ansprechkennlinie (34) geprüft wird, ob die jeweils gebildeten Differenz- und Stabilisierungsstromwerte einen Punkt auf der einen Seite der Ansprechkennlinie (34) dem sogenannten Sperren-Gebiet (33), oder einen Punkt auf der anderen Seite der Ansprechkennlinie (34), dem sogenannten Auslösen-Gebiet (35), beschreiben, wobei

    - die Auswerteeinrichtung (21) hinsichtlich der Bildung des Sperren-Gebietes (33) so ausgelegt ist, daß im Sperren-Gebiet (33) zur Erzielung einer Zusatzstabilisierung ein Zusatzstabilisierungs-Bereich (31) vorhanden ist, der durch einen unterhalb einer an einem vorbestimmten Stabilisierungsstromwert ($I_{STABe}$) beginnenden und in vorgegebener Weise linear mit dem Stabilisierungsstrom ansteigenden Grenzlinie (32) liegenden Abschnitt des Sperren-Gebietes (33) definiert ist,

**dadurch gekennzeichnet,** daß

    - die Auswerteeinrichtung (21) in einer Stablisierungsschaltung (25) eine Prüfanordnung (30) enthält, die die jeweils gebildeten Differenz- und Stabilisierungsstromwerte ($I_{DIFFe}$, $I_{STABe}$) dahingehend untersucht, ob sie einen Punkt im Zusatzstabilisierungs-Bereich (31) beschreiben, und die bei einem ersten festgestellten Punkt im Zusatzstabilisierungs-Bereich (31) nach Eintritt des Fehlerfalles ein Sperrsignal abgibt, und
    - der Prüfanordnung (30) eine Blockiereinrichtung (37) mit zugeordneter Rückstelleinrichtung (41) derart nachgeordnet ist, daß durch das Sperrsignal einerseits die Blockiereinrichtung (37) aktiviert wird und andererseits bei einem ersten festgestellten Punkt außerhalb des Zusatzstabilisierungs-Bereichs (31) im Verlaufe desselben Fehlerfalles ein in der Rückstelleinrichtung (41) vorhandenes Zeitglied (40) mit vorgegebener Zeitverzögerung (e) gestartet wird, das

    - ausgangsseitig mit einem Rücksetzeingang (R) der Blockiereinrichtung (37) in Verbindung steht und nach der vorgegebenen Zeitverzögerung (e) die Blockiereinrichtung (37) zurücksetzt.

2. Stromdifferentialschutzanordnung nach Anspruch 1 **dadurch gekennzeichnet,** daß

in der Rückstelleinrichtung (41) eine Überwachungseinrichtung (42) vorhanden ist, die eingangsseitig mit den Differenz- und Stabilisierungsstromwerten ($I_{DIFFe}$, $I_{STABe}$) beaufschlagt ist und ausgangsseitig mit einer Zeitstufe (45) mit vorbestimmter Zeitverzögerung (f) verbunden ist,

die Überwachungseinrichtung (42) eingangsseitig einen Quotientenbildner (43) aufweist, der den Quotienten (Q) aus den jeweiligen Differenz- und Stabilisierungsstromwerten ($I_{DIFFe}$, $I_{STABe}$) bildet,

in der Überwachungseinrichtung (42) dem Quotientenbildner (43) eine Schwellenwerterfassungseinrichtung (44) nachgeordnet ist, die

- bei einem oberhalb eines Schwellenwertes (b) liegenden Quotienten (Q) die Zeitstufe (45) startet und

die Zeitstufe (45) ausgangsseitig mit dem Rücksetzeingang (R) der Blockiereinrichtung (37) verbunden ist.

3. Stromdifferentialschutzanordnung nach Anspruch 1 oder 2,
**dadurch gekennzeichnet,** daß

die Rückstelleinrichtung (41) eine mit den Differenz- und Stabilisierungsstromwerten ($I_{DIFFe}$, $I_{STABe}$) beaufschlagte Überwachungsanordnung (48) enthält, die eingangsseitig eine Anordnung zur Quotientenbildung (49) aus den Differenz- und Stabilisierungsstromwerten ($I_{DIFFe}$, $I_{STABe}$) enthält,

der Anordnung zur Quotientenbildung (49) ein Differenzbildner (50) nachgeschaltet ist, der die Differenz ($\Delta Q$) der jeweils nacheinander gebildeten Quotienten (Q) aus den Differenz- und Stabilisierungsstromwerten ($I_{DIFFe}$, $I_{STABe}$) bildet,

dem Differenzbildner (50) eine Schwellenwerterfassungsanordnung (51) nachgeordnet ist, in der die jeweils gebildete Differenz ($\Delta Q$) einerseits auf das Überschreiten eines oberen Schwellenwertes (c) mit Erzeugen eines ersten Steuersignals und andererseits auf das Unterschreiten eines unteren Schwellenwertes (d) mit Erzeugen eines zweiten Steuersignals untersucht wird, und

die Überwachungsanordnung (48) mit der Blockiereinrichtung (37) über eine Zähleinrichtung (53) für das erste Steuersignal verbunden ist, die

- bei einem vorgegebenen Zählerstand ein Rücksetzsignal an die Blockiereinrichtung (37) abgibt.

4. Stromdifferentialschutzanordnung nach einem der vorangehenden Ansprüche,
**dadurch gekennzeichnet,** daß

das Zeitglied (40), die Zeitstufe (45) und die Zähleinrichtung (53) über ein Logik-Glied (46) mit dem Rücksetzeingang (R) der Blockiereinrichtung (37) verbunden sind.

5. Stromdifferentialschutzanordnung nach einem der vorangehenden Ansprüche,
**dadurch gekennzeichnet,** daß

die Meßwertvorverarbeitungseinrichtung (10) eine Berechnungseinheit (17) enthält, in der

- aus den erfaßten Strömen effektivwertproportionale Meßgrößen gebildet werden, mit denen die Differenz- und Stabilisierungsstromwerte ($I_{DIFFe}$, $I_{STABe}$) gewonnen werden.

## Claims

1. Current differential protection arrangement for an electric power supply unit, having

- a measured value preprocessing device (10), in which differential current values ($I_{DIFF}$, $I_{DIFFe}$), and stabilization current values ($I_{STAB}$, $I_{STABe}$) respectively associated therewith, are in each case continuously formed from currents ($I_1$, $I_2$) detected at the ends (1, 2) of the power supply unit (3) in the event of a fault, and having

- an evaluating device (21) in which, with the aid of a specified dependence of the differential current ($I_{DIFFe}$) on the stabilization current ($I_{STABe}$), according to a response characteristic (34) it is examined whether the respectively formed differential and stabilization current values describe a point on the one side of the response characteristic (34), the so-called blocking area (33), or a point on the other side of the response characteristic (34), the so-called tripping area (35), wherein

- with respect to the formation of the blocking area (33) the evaluating device (21) is designed in such a way that in the blocking area (33), to attain and additional stabilization, there is an additional stabilization region (31) which is defined by a section of the blocking area (33) which lies below a limiting line (32) which begins at a predetermined stabilization current value ($I_{STABe}$) and rises linearly in a specified manner with the stabilization current,

characterized in that

- in a stabilization circuit (25) the evaluating device (21) includes a test arrangement (30) which examines the respectively formed differential and stabilization current values ($I_{DIFFe}$, $I_{STABe}$) as to whether they describe a point in the additional stabilization region (31) and which, with a first established point in the additional stabilization region (31), emits a blocking signal after the fault has occurred, and

- a blocking device (37) with associated resetting device (41) is arranged downstream of the test arrangement (30) in such a way that by means of the blocking signal on the one hand the blocking device (37) is activated and on the other hand, with a first established point outside the additional stabilization region (31) in the course of the same fault, a timing element (40) present in the resetting device (41) is started with specified delay (e), which timing element (40)

  - is connected on the output side to a resetting input (R) of the blocking device (37) and resets the blocking device (37) after the specified delay (e).

2. Current differential protection arrangement according to claim 1, characterized in that

- in the resetting device (41) there is a monitoring device (42) which on the input side receives the differential and stabilization current values ($I_{DIFFe}$, $I_{STABe}$) and on the output side is connected to a timer (45) with predetermined delay (f),

- the monitoring device (42) has on the input side a quotient former (43) which forms the quotient (Q) from the respective differential and stabilization current values ($I_{DIFFe}$, $I_{STABe}$),

- in the monitoring device (42) a threshold value detection device (44) is downstream of the quotient former (43), which threshold value detection device (44)

  - with a quotient (Q) lying above a threshold value (b) starts the timer (45), and

- the timer (45) is connected on the output side to the resetting input (R) of the blocking device (37).

3. Current differential protection arrangement according to claim 1 or 2, characterized in that

- the resetting device (41) includes a monitoring arrangement (48) which receives the differential and stabilization current values ($I_{DIFFe}$, $I_{STABe}$), and which includes on the input side an arrangement for quotient formation (49) from the differential and stabilization current values ($I_{DIFFe}$, $I_{STABe}$),

- a subtractor (50) is downstream of the arrangement for quotient formation (49), the subtractor forming the difference ($\Delta Q$) between the respectively successively formed quotients (Q) from the differential and stabilization current values ($I_{DIFFe}$, $I_{STABe}$).

- downstream of the subtractor (50) there is a threshold value detection arrangement (51) in which the respectively formed difference ($\Delta Q$) is examined on the one hand for exceeding an upper threshold value (c) with the generation of a first control signal and on the other hand for falling below a lower threshold value (d) with the generation of a second control signal, and

- the monitoring arrangement (48) is connected to the blocking device (37) by way of a counting device (53) for the first control signal, which counting device (53)

  - upon a specified count emits a resetting signal to the blocking device (37).

4. Current differential protection arrangement according to one of the preceding claims, characterized in that

- the timing element (40), the timer (45) and the counting device (53) are connected by way of a logic element (46) to the resetting input (R) of the blocking device (37).

5. Current differential protection arrangement according to one of the preceding claims, characterized in that

- the measured value preprocessing device (10) includes a calculation unit (17) in which

  - effective-value-proportional measured variables are formed from the detected currents, with which measured variables the differential and stabilization current values ($I_{DIFFe}$, $I_{STABe}$) are obtained.

**Revendications**

1. Dispositif de protection contre des courants différentiels pour une unité d'alimentation en énergie électrique, comportant

- un dispositif de prétraitement de valeurs mesurées (10), dans lequel des valeurs de courants différentiels ($I_{DIFF}$, $I_{DIFFe}$) et des valeurs de courants de stabilisation associées ($I_{STAB}$, $I_{STABe}$) sont formées en permanence à partir de courants ($I_1$, $I_2$) détectés en cas d'erreur, aux extrémités (1, 2) de l'unité d'alimentation en énergie (3), et

- un dispositif d'évaluation (21) qui teste, à l'aide d'une dépendance prédéterminée du courant différentiel ($I_{DIFFe}$) vis-à-vis du courant de stabilisation ($I_{STABe}$) selon une courbe caractéristique de réponse (34), si les valeurs de courants différentiels et de courants de stabilisation formées déterminent un point situé d'un côté de la courbe caractéristique de réponse (34), dans la zone dite de blocage (33), ou un point situé de l'autre côté de la courbe caractéristique de réponse (34), dans la zone dite de déclenchement (35),

  - le dispositif d'évaluation (21) étant conçu, pour ce qui est de la formation de la zone de blocage (33), de telle sorte que, pour obtenir une stabilisation supplémentaire, la zone de blocage (33) comprend une zone de stabilisation supplémentaire (31) qui est déterminée par une partie de la zone de blocage (33) qui se trouve en dessous d'une courbe limite (32) commençant à une valeur de courant de stabilisation ($I_{STABe}$) prédéterminée et augmentant de façon linéaire et prédéterminée avec le courant de stabilisation,

caractérisé par le fait que

- le dispositif d'évaluation (21) contient dans un circuit de stabilisation (25) un dispositif de test (30) qui teste les valeurs de courants différentiels et de courants de stabilisation ($I_{DIFFe}$, $I_{STABe}$) formées pour savoir si elles déterminent un point dans la zone de stabilisation supplémentaire (31) et qui délivre un signal de blocage après l'occurrence d'une erreur lorsqu'un premier point est trouvé dans la zone de stabilisation supplémentaire (31), et
- un dispositif de blocage (37), ayant un dispositif de remise à l'état initial (41) associé, est agencé du côté aval du dispositif de test (30) de telle sorte que le signal de blocage active d'une part le dispositif de blocage (37) et déclenche d'autre part, pour un premier point trouvé en dehors de la zone de stabilisation supplémentaire (31) et au cours du même cas d'erreur, un relais temporisateur (40) situé dans le dispositif de remise à l'état initial (41) et ayant un délai prédéterminé (e),

  - lequel relais temporisateur est relié en sortie à une entrée de remise à l'état initial (R) du dispositif de blocage (37) et remet à l'état initial le dispositif de blocage (37) après le délai prédéterminé (e).

2. Dispositif de protection contre des courants différentiels selon la revendication 1,
   caractérisé par le fait que

- le dispositif de remise à l'état initial (41) comporte un dispositif de contrôle (42) qui reçoit en entrée les valeurs de courants différentiels et de courants de stabilisation ($I_{DIFFe}$, $I_{STABe}$) et qui est relié en sortie à un étage temporisateur (45) ayant un délai prédéterminé (f),
- le dispositif de contrôle (42) comporte en entrée un dispositif de formation de quotient (43) qui forme le quotient (Q) à partir des valeurs de courants différentiels et de courants de stabilisation ($I_{DIFFe}$, $I_{STABe}$),
- dans le dispositif de contrôle (42), un dispositif de détection à valeur de seuil (44) est placé du côté aval du dispositif de formation de quotient (43) et déclenche l'étage temporisateur (45) lorsque le quotient (Q) est supérieur à une valeur de seuil (b) et
- l'étage temporisateur (45) est relié en sortie à l'entrée de remise à l'état initial (R) du dispositif de blocage (37).

3. Dispositif de protection contre des courants différentiels selon la revendication 1 ou 2,
   caractérisé par le fait que

- le dispositif de remise à l'état initial (41) contient un dispositif de contrôle (48) qui reçoit les valeurs de courants différentiels et de courants de stabilisation ($I_{DIFFe}$, $I_{STABe}$) et qui comporte en entrée un dispositif (49) pour la formation de quotient à partir des valeurs de courants différentiels et de courants de stabilisation ($I_{DIFFe}$, $I_{STABe}$),
- un dispositif de formation de différence (50) est placé du côté aval du dispositif de formation de quotient (49) et forme la différence ($\Delta Q$) des quotients (Q) formés successivement à partir des valeurs de courants différentiels et de courants de stabilisation ($I_{DIFFe}$, $I_{STABe}$),
- dans un dispositif de détection à valeur de seuil (51) placé du côté aval du dispositif de formation de différence (50), la différence ($\Delta Q$) formée est testée pour savoir d'une part si elle est supérieure à une valeur de seuil supérieure (c), un premier signal de commande étant alors produit, et d'autre part si elle est inférieure à une valeur de seuil inférieure (d), un deuxième signal de commande étant alors produit, et
- le dispositif de contrôle (48) est relié au dispositif de blocage (37) par l'intermédiaire d'un compteur (53) pour le premier signal de commande,

- lequel compteur délivre un signal de remise à l'état initial au dispositif de blocage (37) lorsqu'un état de comptage prédéterminé est atteint.

4. Dispositif de protection contre des courants différentiels selon l'une des revendications précédentes,

   caractérisé par le fait que

   - le relais temporisateur (40), l'étage temporisateur (45) et le compteur (53) sont reliés par l'intermédiaire d'un circuit logique (46) à l'entrée de remise à l'état initial (R) du dispositif de blocage (37).

5. Dispositif de protection contre des courants différentiels selon l'une des revendications précédentes,

   caractérisé par le fait que

   - le dispositif de prétraitement de valeurs mesurées (10) contient une unité de calcul (17) dans laquelle

     - il est formé à partir des courants détectés des grandeurs mesurées qui sont proportionnelles aux valeurs effectives et avec lesquelles les valeurs de courants différentiels et de courants de stabilisation ($I_{DIFFe}$, $I_{STABe}$) sont obtenues.

FIG 1

FIG 4

FIG 2

FIG 3

FIG 5

FIG 6

FIG 7